**Europäisches Patentamt**

**European Patent Office**

**Office européen des brevets**

(11) Veröffentlichungsnummer: **0 063 828**
**B1**

# EUROPÄISCHE PATENTSCHRIFT

(45) Veröffentlichungstag der Patentschrift:
14.01.87

(21) Anmeldenummer: **82200320.8**

(22) Anmeldetag: **11.03.82**

(51) Int. Cl.⁴: **G 01 B 11/02, G 01 N 23/04**

(54) **Prüfverfahren für Werkstücke.**

(30) Priorität: **25.03.81 DE 3111728**

(43) Veröffentlichungstag der Anmeldung:
**03.11.82 Patentblatt 82/44**

(45) Bekanntmachung des Hinweises auf die Patenterteilung:
**14.01.87 Patentblatt 87/3**

(84) Benannte Vertragsstaaten:
**CH DE FR GB LI NL SE**

(56) Entgegenhaltungen:
**DE-A-2 720 865**
**DE-A-3 026 897**
**FR-A-2 405 460**
**FR-A-2 419 628**
**US-A-4 180 831**

**ICASSP 80 PROCEEDINGS-IEEE INTERNATIONAL**
**CONFERENCE ON ACOUSTICS, SPEECH AND**
**SIGNAL PROCESSING, Band 2/3, 9.-11. April 1980,**
**Fairmont Hotel, Denver, Colorado, pages 418-421,**
**IEEE, New York, USA, R.Y. TSAI et al.: "Moving**
**image restoration and registration"**

(73) Patentinhaber: **Philips Patentverwaltung GmbH,**
**Billstrasse 80, D-2000 Hamburg 28 (DE)**
(84) Benannte Vertragsstaaten: **DE**

(73) Patentinhaber: **N.V. Philips' Gloeilampenfabrieken,**
**Groenewoudseweg 1, NL- 5621 BA Eindhoven (NL)**
(84) Benannte Vertragsstaaten: **CH FR GB LI NL SE**

(72) Erfinder: **Kowalski, Günter, Dr., Fasanenweg 8a,**
**D-2080 Pinneberg (DE)**

(74) Vertreter: **Hartmann, Heinrich, Dipl.- Ing., Philips**
**Patentverwaltung GmbH Billstrasse 80 Postfach**
**10 51 49, D-2000 Hamburg 28 (DE)**

## Beschreibung

Die Erfindung betrifft ein Verfahren nach dem Oberbegriff des unabhängigen Anspruches 1.

Prüfverfahren dieser Art sind allgemein bekannt, beispielsweise aus der DE-OS 27 20 865.

Die zur Durchführung der Verfahren geeigneten Systeme lassen sich z.B. bei der zerstörungsfreien Werkstoffprüfung einsetzen, bei der die Werkstücke mittels Röntgenstrahlung durchstrahlt und die aufgefangenen Röntgenstrahlen über einen Bildkonverter in sichtbare Strahlung umgewandelt werden.

Aufgabe der Erfindung ist es, ein Verfahren anzugeben, mit dessen Hilfe Objekte, die im Bild einer Kamera unterschiedliche Positionen einnehmen, mit einem verbesserten Signal-Rausch-Verhältnis dargestellt werden können.

Diese Aufgabe wird bei ein Verfahren das eingangs genamten hat gemäß der Erfindung dadurch gelöst, daß die zu verschiedenen Bildern gehörenden Bildwerte so ausgelesen und zusammengefaßt werden, daß die den gleichen Objektpunkten zugeordneten Bildwerte überlagert werden, und daß die so überlagerten Bildwerte einer Bildwiedergabeeinrichtung zugeführt werden.

Auf diese Weise wird ein Bild des Objektes mit erhöhtem Signal-Rausch-Verhältnis erzeugt, da jeweils mehrere gleiche Objekte entsprechend der Zahl der Bilder deckungsgleich überlagert werden.

Vorzugsweise werden auch diejenigen jeweils verschiedenen Bildern zugeordneten Bildwerte überlagert, die Bildpunkte bzw. die Bildelemente repräsentieren, die jeweils die gleiche Lage relativ zum Objekt besitzen. Eine derartige Verarbeitung der Bildwerte entspricht z.B. einer Verschiebung übereinanderliegender Bilder um einen der jewiligen Objektverschiebung entsprechenden Betrag in einer zur Verschieberichtung entgegengesetzten Richtung, so daß die Objekte zwischen den Bildern praktisch zur Deckung kommen, und einer anschließenden Überlagerung der übereinanderliegenden Bildwerte.

Hierdurch wird erreicht, daß das Rauschen aufgrund seines statistischen Verhaltens im Überlagerungsbild zum größten Teil unterdrückt wird. Besonders vorteilhaft ist ferner, daß z.B. Bildwerte, die durch fehlerhafte Targetstrukturen der Kamera hervorgerufen werden, nach der Überlagerung der Bildwerte an verschiedenen Stellen im Überlagerungsbild erscheinen. Diese durch die Targetstrukturen hervorgerufenen Bildfehler überlagern sich somit nicht, sondern werden im Gegenteil im Überlagerungsbild verschmiert.

Die Zeichnung stellt Ausführungsbeispiele der Erfindung dar. Es zeigen:

Fig. 1a, b zwei mittels einer elektronischen Kamera aufgenommene Bilder, die zu einem verbesserten Bild überlagert sind,

Fig. 2 die Amplitudenverläufe der beiden Bilder, und

Fig. 3 eine Vorrichtung zur rauscharmen Darstellung von Bildern.

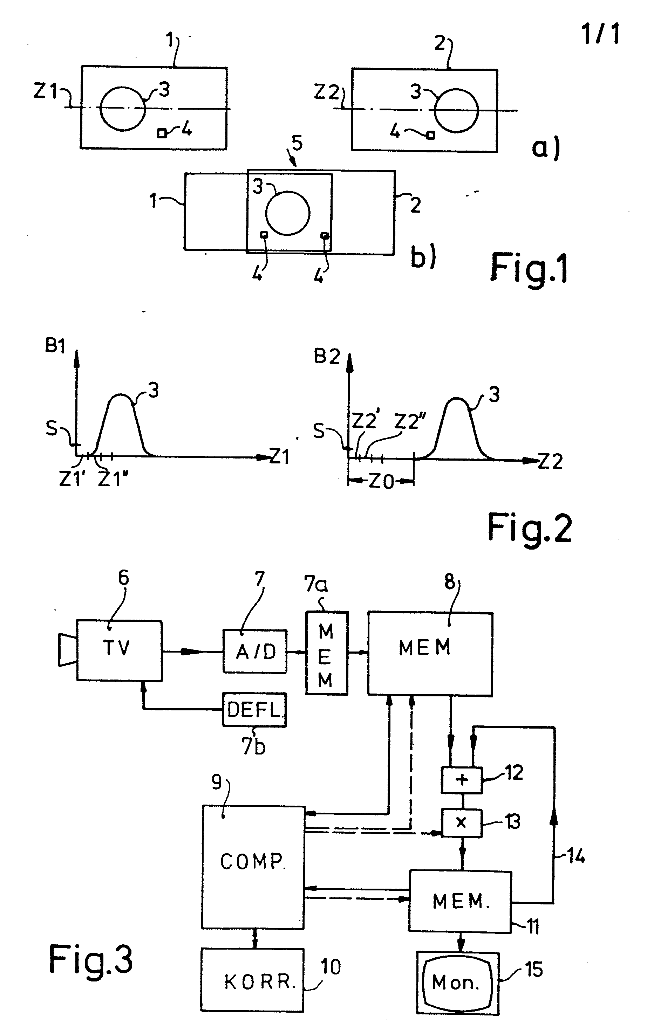

In der Fig. 1a sind zwei z.B. auf einem Monitor sichtbar gemachte Bilder 1 und 2 dargestellt, die ein sich in diesen Bildern bewegendes Objekt 3 zu unterschiedlichen Zeitpunkten zeigen. Das Objekt 3 kann z.B. ein von einer Röntgenstrahlungsquelle durchstrahltes Werkstück sein, das auf einem Fließband an einer ruhenden Kamera vorbeigeführt wird. Die Röntgenstrahlung wird dabei von einem Bildwandler in sichtbares Licht umgewandelt und das entsprechende Bild von der Kamera aufgenommen. Zusätzlich ist in den Bildern 1 und 2 ein Bildfehler 4 eingezeichnet, der z.B. aufgrund einer fehlerhaften Targetstruktur der Kamera zustandegekommen ist und daher immer an derselben Stelle in den Bildern 1 und 2 liegt.

Die Überlagerung der Bilder 1 und 2 zu einem verbesserten, rauschärmeren Überlagerungsbild 5 ist in Fig. 1b gezeigt. Die Bilder 1 und 2 sind dabei so gegeneinander versetzt überlagert worden, daß die Verschiebung des Objektes 3 zwischen den beiden Bildern 1 und 2 ausgeglichen wurde, d.h., die Bilder des Obejktes 3 wurden durch eine Verschiebung zur Deckung gebracht. Das Objekt 3 tritt auf diese Weise deutlich im Überlagerungsbild 5 hervor, während das Bildrauschen durch die Überlagerung vermindert wird. Ebenso liegen die Bildfehler 4 an unterschiedlichen Stellen im Überlagerungsbild 5. Sie werden quasi im Überlagerungsbild 5 verschmiert und treten daher praktisch nicht mehr in Erscheinung.

In der Fig. 2 sind die Amplitudenverläufe bzw. die Bildwerte $B_1$, $B_2$ der beiden Bilder 1 und 2 entlang jeweils einer Bild-bzw. Speicherzeile $Z_1$, $Z_2$ (vgl. Fig. 1a) dargestellt (bzw. die Bildsignale $B_1(Z_1)$ und $B_2(Z_2)$. Rauschsignale sind hier Übersicht wegen nicht eingezeichnet. Das Objekt 3 bzw. dessen impulsförmiger Bildwerteverlauf ist dabei entlang der Zeile $Z_2$ um $Z_0$ gegenüber dem Objekt 3 auf der Zeile $Z_1$ verschoben. Zeilen- und Verschieberichtung stimmen hier überein.

Sollen nun die zu verschiedenen Bildern gehörenden Bildwerte $B_1$, $B_2$ so ausgelesen und zusammengefaßt werden, daß die den gleichen Objektpunkten zugeordneten Bildwerte überlagert werden können, so muß die Verschiebung $Z_0$ der Bildsignale gegeneinander bekannt sein. In diesem Falle können beispielsweise die Bildwerte an den Speicherplätzen (bzw. Bildpunkten) $Z_1'$ und $Z_2'+Z_0$ ausgelesen und überlagert werden. Entsprechendes gilt für die weiteren Speicherplätze.

Die Bildwerte $B_2$ in der Spechcerzeile $Z_2$ können aber auch in Zeilenrichtung um eine den Verschiebebetrag $Z_0$ entsprechende Anzahl von Speicherplätzen zurückverschoben werden, um den Versatz der Bildsignale aufgrund der Obejektverschiebung zwischen den Bildern auszugleichen. In diesem Fall werden dann die Bildwerte jeweils einander entsprechender Speicherplätze $Z_1'$, $Z_1''$, ...; $Z_2'$, $Z_2''$, ... überlagert.

Ist die Verschiebung $Z_0$ des Objektes 3 zwischen jeweils zwei Aufnahmen bekannt, z.B. weil die Geschwindigkeit des Objektes 3 und die Zeit zwischen den Aufnahmen bekannt ist, so ist auch die Verschiebung $Z_0$ der Bildwerte $B_2$ gegenüber den Bildwerten $B_1$ bekannt, die dann zur Steuerung des Auslese- bzw. Überlagerungsvorganges der Bildwerte herangezogen werden kann, wie oben beschrieben.

In vielen Fällen ist die Verschiebung Z0 jedoch unbekannt und muß daher erst aus den Verläufen der Bildwerte B1, B2 etc. errechnet werden. Hierzu gibt es mehrere Möglichkeiten.

Beispielsweise kann die Objektverschiebung Z0 durch Vergleich der zu den jeweiligen Bildern gehörenden Bildwerte B1, B2 mit einem Schwellwert S ermittelt werden. Auf diese Weise kann leicht der Anfang und das Ende des Objektes 3 ermittelt werden, indem alle Bildwerte, die über dem Schwellwert S liegen, dem Objekt 3 zugeordnet werden und umgekehrt. Die Obejktverschiebung Z0 ergibt sich dann aus der Zahl der zwischen den Objektbildern liegenden Bildpunkten.

Die Ermittlung der Objektverschiebung Z0 zwischen jeweils zwei Bildern kann aber auch derart erfolgen, daß die Bildsignale B1(Z1) und B2(Z2), also die Menge der in Zeilenrichtung Z1 bzw. Z2 liegenden Bildwerte, gegeneinander verschoben und für unterschiedliche Verschiebepositionen jeweils die Kreuzkorrelationen der Bildsignale gebildet werden, wobei anschließend das Maximum der Kreuzkorrelation ermittelt wird. Bei jeder Verschiebeposition wird also das Integral über das Produkt der beiden Bildsignale B1(Z1), B2(Z2) gebildet (Kreuzkorrelation). Erst wenn beide Bildsignale aufeinanderliegen (deckungsgleich sind), wird die Kreuzkorrelation maximal. Die Objektverschiebung Z0 ergibt sich dann z.B. aus der Zahl der Verschiebeschritte bzw. deren Länge bis zu dem Verschiebeschritt, an dem die Kreuzkorrelation ihren größten Wert annimmt.

Die nach der Ermittlung der Objektverschiebung Z0 vorzunehmende Überlagerung der Bildwerte B1 bzw. B2 zur Erzeugung der verbesserten Bilder kann beispielsweise so erfolgen, daß aus den Bildwerten, die jeweils gleichen Objektpunkten zugeordnet sind, der Mittelwert gebildet wird. Die gleichen Objektpunkten zugeordneten Bildwerte können aber auch einer nichtlinearen Filterung unterzogen werden, z.B. einer Median-Filterung, bei der jeweils nur derjenige Bildwert weiter verwendet wird, dessen Größe etwa in der Mitte der untersuchten Bildwertgrößen liegt.

Wird eine Folge von Bildern eines Objektes aufgenommen, so ist es vorteilhaft, das jeweils jüngste Bild und ein aus den vorangegangenen Bildern der Folge erzeugtes, verbessertes (Überlagerungs-)Bild bzw. die entsprechenden Bildwerte zur Ermittlung der Objektverschiebung heranzuziehen. Hierdurch wird erreicht, daß die Objektverschiebung immer genauer ermittelt werden kann, was zur Verbesserung der Qualität der Überlagerungsbilder beiträgt. Die vorangegangenen Bildwerte der Folge können dabei mit einem Faktor gewichtet werden, der umso kleiner ist, je früher das Bild bzw. die entsprechenden Bildwerte in der Bildfolge erscheinen, damit der Einfluß weiter zurückliegender Bilder vermindert wird.

Die Fig. 3 zeigt ein Ausführungsbeispiel einer Vorrichtung, mit der das erfindungsgemäße Verfahren realisiert werden kann. Zur Aufnahme einer Folge von Bildern des Objektes 3 (nicht dargestellt) dient eine Fernsehkamera 6, die über einen Analog-Digitalwandler 7 mit einem elektronischen Speicher 8 verbunden ist, in dem die digitalisierten Bilder gespeichert werden. Die sich zwangsläufig ergebenden Verzerrungen, z.B. durch die Zentralprojektion bei einer Röntgendurchleuchtung (endlicher Quellenabstand) oder durch einen nicht ebenen Eingangsschirm der Fernseheinrichtung, können, da sie stationär sind, Durch entsprechendes Abspeichern im Speicher 8, durch Umspeichern in einem wesentlich kleineren Vorspeicher 7a oder auch durch eine entsprechende Verformung der etwa sägezahnförmigen Ablenkströme in dem Ablenkgenerator 7b der Kamera 6 korrigiert werden.

Mit Hilfe eines Rechners 9 können die im Speicher 8 gespeicherten Bilderwerte, wie bereits anhand der Fig. 1 und 2 gezeigt, zur Erzeugung verbesserter Überlagerungsbilder herangezogen werden. Ist die Objektverschiebung bekannt, so kann der Rechner 9 sie unmittelbar zum Auslesen und Überlagern der Bildwerte im Speicher 8 verwenden. Ist sie unbekannt, so ermittelt der Rechner 9 diese Objektverschiebung unter Zuhilfenahme der im Speicher 8 gespeicherten Bildwerte. Für die Korrelationsbildung, die ein- oder zweidimensional oder nur mit einen Teilbereich der Bilder repräsentierenden Bildwerten vorgenommen werden kann, ist der Rechner 9 mit einem Spezialprozessor 10 verbunden, der solche Korrelationen schnell durchführt. Die Ermittlung der Obejektverschiebung unter Zuhilfenahme der Schwellwerte S kann ebenfalls mit Hilfe des Rechners 9 erfolgen.

Die mit Hilfe des Rechners 9 ausgelesenen und zur Überlagerung vorgesehenen Bilddaten werden anschließend einem weiteren Speicher 11 über eine Addierschaltung 12 und einem Multiplizierglied 13 zugeführt. Über eine Datenleitung 14, die den weiteren Speicher 11 mit dem zweiten Eingang des Addierers 12 verbindet, können die jeweils im weiteren Speicher 11 gespeicherten Bildwerte mit aus dem Speicher 8 nachfolgenden Bildwerten addiert bzw. die so erzeugte Summe mit einem Faktor zur Bildung des jeweiligen Mittelwertes multipliziert werden. Mittels des Multipliziergliedes 13 kann zusätzlich auch die erwähnte gewichtete Mittelwertbildung vorgenommen werden. Im weiteren Speicher 11 wird letztlich das verbesserte Überlagerungsbild erstellt, das auf einem mit ihm verbundenen Monitor 15 dargestellt wird.

## Patentansprüche

1. Verfahren zur Prüfung eines Objektes, welches an einer ruhenden elektronischen Kamera vorbeigeführt wird, die eine Folge von Bildern des Objektes aufnimmt, wobei die jeweiligen Bildwerte in einem elektronischen Speicher gespeichert und einer Auswertevorrichtung zugeführt werden, **dadurch gekennzeichnet,** daß die zu verschiedenen Bildern (1, 2) gehörenden Bildwerte so ausgelesen und zusammengefaßt werden, daß die den gleichen Objektpunkten zugeordneten Bildwerte überlagert werden, und daß die so überlagerten Bildwerte einer Bildwiedergabeeinheit (15) zugeführt werden.

2. Verfahren nach Anspruch 1, **dadurch gekennzeichnet**, daß die im elektronischen Speicher gespeicherten Bildwerte zur Ermittlung der Verschiebung des Objektes (3) zwischen den Bildern herangezogen werden und die ermittelte Objektverschiebung zur Steuerung des Auslese- und Überlagerungsvorganges dient.

3. Verfahren nach Anspruch 2, **dadurch gekennzeichnet**, daß die Objektverschiebung durch Vergleich der zu den jeweiligen Bildern (1, 2) gehörenden und in Verschieberichtung liegenden Bildwerte mit einem Schwellwert (S) ermittelt wird.

4. Verfahren nach Anspruch 2, **dadurch gekennzeichnet**, daß zur Ermittlung der Objektverschiebung aus in Verschieberichtung liegenden Bildwerten bestehende Bildsignale der jeweiligen Bilder gegeneinander verschoben und für unterschiedliche Verschiebepositionen jeweils die Kreuzkorrelationen gebildet werden, und daß anschließend das Maximum der Kreuzkorrelation ermittelt wird.

5. Verfahren nach einem der Ansprüche 1 bis 4, **dadurch gekennzeichnet**, daß zur verbesserten Darstellung des Objektes aus den zu überlagernden Bildwerten der jeweiligen Bilder (1, 2) der Mittelwert gebildet wird.

6. Verfahren nach einem der Ansprüche 1 bis 4, **dadurch gekennzeichnet**, daß zur verbesserten Darstellung des Objektes die zu überlagernden Bildwerte der Bilder (1, 2) einer nichtlinearen Filterung, z.B. einer Median-Filterung, unterzogen werden.

7. Verfahren nach einem der vorhergehenden Ansprüche, **dadurch gekennzeichnet**, daß bei einer Folge von Bildern (1, 2) die Bildwerte des jeweils jüngsten Bildes und aus den vorangegangenen Bildern der Folge erzeugte, überlagerte Bildwerte zur Ermittlung der Objektverschiebung herangezogen werden.

8. Verfahren nach Anspruch 5 und 7, **dadurch gekennzeichnet**, daß die Bildwerte mit einem Faktor gewichtet werden, der um so kleiner ist, je früher das Bild in der Folge erscheint.

## Claims:

1. A method for the testing of a workpiece which is moved past a stationary electronic camera which records a sequence of images of the workpiece, the relevant image values being stored in an electronic memory in order to be applied to an evaluation device, characterized in that the image values associated with different images (1, 2) are read and combined so that image values asssociated with the same object points are superposed and image values thus superposed being applied to an image display device (15).

2. A method as claimed in Claim 1, characterized in that the image values stored in the electronic memory are used in order to determine the shift of the object (3) between the images, the object shift thus determined being used to control the read and superposition operation.

3. A method as claimed in Claim 2, characterized in that the object shift is determined by comparison of the image values which are associated with the relevant images (1, 2) and which are situated in the shift direction with a threshold value (S).

4. A method as claimed in Claim 2, characterized in that in order to determine the object shift from image signals, consisting of image values situated in the shift direction, of the relevant images which are shifted with respect to one another and for different shift positions, each time the cross-correlations are formed, after which the maximum of the cross-correlation is determined.

5. A method as claimed in any one of the Claims 1 to 4, characterized in that for the improved display of the object, the mean value is determined of the image values to be superposed of the relevant images (1, 2).

6. A method as claimed in one of the Claims 1 to 4, characterized in that the image values of the images (1, 2) to be superposed are subjected to a non-linear filtering process, for example, a medium value filtering process, in order to improve the display of the object.

7. A method as claimed in any one of the preceding Claims, characterized in that in order to determine the object shift for a sequence of images (1, 2) use is made of the image values of each time the latest image and superposed image values obtained from the previous images of the sequence.

8. A method as claimed in Claim 5 and 7, characterized in that the measurement values are weighted with a factor which is smaller as the image appears earlier in the sequence.

## Revendications

1. Méthode d'essai d'un objet, qui défile devant une caméra électronique fixe, qui enregistre une succession d'images de l'objet, les valeurs d'image respectives étant stockées dans une mémoire électronique et étant appliquées à un dispositif d'évaluation, caractérisée en ce que les valeurs d'image appartenant à des images différentes (1, 2) sont lues et groupées d'une manière telle que les valeurs d'image associées aux même points de l'objet soient superposées et que les valeurs d'image ainsi superposées soient appliquées à une unité de reproduction d'image (15).

2. Méthode suivant la revendication 1, caractérisée en ce que les valeurs d'image stockées dans la mémoire électronique sont utilisées pour déterminer le déplacement de l'objet (3) entre les images et le déplacement déterminé de l'objet sert à commander l'opération de lecture et de superposition.

3. Méthode suivant la revendication 2, caractérisée en ce que le déplacement de l'objet est déterminé par comparaison à une valeur de seuil des valeurs d'image appartenant aux images respectives (1, 2) et situées dans la direction du déplacement.

4. Méthode suivant la revendication 2, caractérisée en ce que, pour déterminer le déplacement de l'objet, des signaux d'image formés à partir des valeurs d'image situées dans la direction du déplacement des images respectives sont décalés l'un de l'autre et les corrélations croisées sont formées chaque fois pour des positions de déplacement différentes, puis le maximum de la corrélation croisée est déterminé.

5. Méthode suivant l'une quelconque des revendications 1 à 4, caractérisée en ce que pour améliorer la visualisation de l'objet, à partir des valeurs d'image à superposer des images respectives (1, 2), la valeur moyenne est formée.

6. Méthode suivant l'une quelconque des revendications 1 à 4, caractérisée en ce que pour améliorer la visualisation de l'objet, les valeurs d'image à superposer des images (1, 2) sont soumises à un filtrage non linéaire, par exemple à un filtrage médian.

7. Procédé suivant l'une quelconque des revendications précédentes, caractérisé en ce que dans le cas d'une succession d'images (1, 2), les valeurs d'image de l'image la plus récente et les valeurs d'image superposées provenant des images précédentes de la séquence sont utilisées pour déterminer le déplacement de l'objet.

8. Procédé suivant les revendications 5 et 7, caractérisé en ce que les valeurs d'image sont pondérées par un facteur qui est d'autant plus petit que l'image apparaît plus tôt dans la séquence.

0 063 828

1/1

Fig.1

Fig.2

Fig.3